# EUROPEAN PATENT APPLICATION

(11) **EP 4 641 346 A1**
(43) Date of publication of application: **29.10.2025**
(21) Application number: 24172276.8
(22) Date of filing: 24.04.2024
(51) Int. Cl.: G05D 16/10, G05D 16/20

(54) **PRESSURE REGULATION SYSTEM**

(71) Applicant: Hamilton Sundstrand Corporation, Charlotte, NC 28217-4578 (US)
(72) Inventor: MORNACCHI, Andrea, Torino, TO,10126 (IT); ROMBOLA', Federico, Drapia, VV, 89862 (IT); CAPPO, Matteo, Torino, TO, 10129 (IT); QUAGLIA, Enrico, Torino, TO, 10023 (IT)
(74) Representative: Casalonga

(57) **Abstract**

A pressure regulation system (1) for a fluid system of an aircraft. The pressure regulation system (1) has a pressure regulation valve (21), a control line (8) and a pilot valve (10). The pressure regulation valve (21) has a valve inlet (2), a valve outlet (4), a pressure regulation valve member (5) and a reference chamber (6). The pressure regulation valve member (5) controls the flow of fluid from the valve inlet (2) to the valve outlet (4). The pressure in the reference chamber (6) controls the pressure regulation valve member (5). The pilot valve (10) has a pilot valve member (12) and piezoelectric actuator (14). The piezoelectric actuator (14) controls the pilot valve member (12). The pilot valve (10) controls the pressure in the reference chamber (6) via the control line (8).

## Description

### FIELD

The examples described herein relate to a pressure regulation system of an aircraft, in particular a pilot valve configured to regulate a pressure in a reference chamber of a pressure regulation valve of a pressure regulation system.

### BACKGROUND

Pressure regulation systems are designed to regulate pressure in fluid systems and may be used in environmental control systems, e.g. in anti-icing systems of aircraft. Increasingly there is demand for electrically powered and controlled systems in order to save weight on aircraft. There is also demand to operate pressure regulation systems to control the behaviour of fluid systems at different stages of a flight; however, the behaviour of the fluid systems must be predictable when electrical power is lost. In certain environmental control systems, such as an anti-ice system, it is important to have a failsafe condition to prevent the build-up of ice on components.

It is desired to provide an improved pressure regulation system for aircraft.

### SUMMARY

The disclosure provides a pressure regulation system for a fluid system of an aircraft, the pressure regulation system comprising: a pressure regulation valve; wherein the pressure regulation valve comprises: a valve inlet; a valve outlet; a pressure regulation valve member; and a reference chamber; wherein the pressure regulation valve member is arranged to control a flow of fluid from the valve inlet to the valve outlet; wherein a pressure in the reference chamber is arranged to control a position of the pressure regulation valve member; wherein the pressure regulation system further comprises: a control line; and a pilot valve; wherein the pilot valve comprises: a pilot valve member; and a piezoelectric actuator; wherein the piezoelectric actuator is arranged to control the position of the pilot valve member; wherein the pilot valve is in fluid communication with the control line and the reference chamber; and wherein the pilot valve is arranged to control the pressure in the reference chamber.

The disclosure also provides a method of operating a pressure regulation system for a fluid system of an aircraft, wherein the pressure regulation system comprises: a pressure regulation valve; wherein the pressure regulation valve comprises: a valve inlet; a valve outlet; a pressure regulation valve member; and a reference chamber; wherein the pressure regulation system further comprises: a control line; and a pilot valve; wherein the pilot valve comprises: a pilot valve member; and a piezoelectric actuator; wherein the pilot valve is in fluid communication with the control line and the reference chamber; wherein the method comprises: operating the piezoelectric actuator to control the position of the pilot valve member; using the position of the pilot valve member to control the pressure in the reference chamber; using the pressure in the reference chamber to control the position of the pressure regulation valve member; and using the position of the pressure regulation valve member to control the flow of fluid from valve inlet to valve outlet.

It will be appreciated that all of the features described herein relating to the pressure regulation system apply equally to the method of operating the pressure regulation system, and vice versa.

The pilot valve member and piezoelectric actuator are arranged such that under normal operating conditions the piezoelectric actuator controls the position of the pilot valve member. By controlling the position of the pilot valve member, the pressure in the reference chamber and position of the pressure regulation valve member may be controlled. For example, the pilot valve is arranged to control the pressure in the reference chamber via the control line. By controlling the position of the pressure regulation valve member, the pressure at the valve outlet may be controlled.

The piezoelectric actuator may help to provide fine control of the downstream pressure in fluid systems and may enable failsafe arrangements to be provided. Improved accuracy in pressure regulation by using the piezoelectric actuator may also assist to reduce the mass of the pilot valve, e.g. compared to pneumatically or solenoid actuated pilot valves. The pilot valve may assist in reducing the mass of fluid bleed from the engine and thus help to improve the efficiency of the aircraft.

In some examples, the reference chamber comprises a reference chamber orifice. The reference chamber orifice may be arranged to allow fluid to flow into the reference chamber from the valve inlet. Thus, the reference chamber may be arranged to be pressurised through the reference chamber orifice by the (upstream) pressure at the valve inlet, e.g. to equilibrate the pressure in the reference chamber with the (upstream) pressure at the valve inlet. The rate of equilibration between the pressure at the valve inlet and the pressure in the reference chamber, as well as the maximum pressure in the reference chamber, may be controlled by the diameter and/or the construction of the reference chamber orifice.

In some examples, the control line is in fluid communication with the fluid system upstream of the valve inlet. The control line may allow fluid to flow into the reference chamber from upstream of the valve inlet. Thus, the reference chamber may be arranged to be pressurised through the control line by the pressure upstream of the valve inlet, e.g. to equilibrate the pressure in the reference chamber with the pressure upstream of the valve inlet. The rate of equilibration between the pressure upstream of the valve inlet and the pressure in the reference chamber, as well as the maximum pressure in the reference chamber, may be controlled by the pressure upstream of the valve inlet (at the location at which the control line is connected) and/or the diameter of the control line.

In some examples, the pilot valve comprises a release orifice. In some examples, the pilot valve is arranged to control the release of pressure from the reference chamber through the release orifice, e.g. via the control line. In some examples, the pilot valve is arranged such that control of the pilot valve member controls the flow of fluid (from the reference chamber) through the release orifice, e.g. via the control line. In some examples, the pilot valve comprises at least one release orifice.

In some examples, the pressure regulation system is arranged to apply an electric potential to control the piezoelectric actuator. Thus, in some examples, the pressure regulation system comprises an electrical controller arranged to apply an electric potential to the piezoelectric actuator (so to control the piezoelectric actuator). Thus, the application of an electric potential may be used to control the position of the pilot valve member.

In some examples, the pressure regulation system comprises an upstream pressure sensor. In some examples, the upstream pressure sensor is arranged to measure the pressure at the valve inlet or upstream of the valve inlet. In some examples, the pressure regulation system comprises a downstream pressure sensor. In some examples, the downstream pressure sensor is arranged to measure the pressure at the valve outlet or downstream of the valve outlet.

In some examples, the pressure regulation system comprises a controller. In some examples, the controller is a full authority digital engine control (FADEC). In some examples, the controller is arranged to control (e.g. send a signal to) the electrical controller. In some examples, the electrical controller is arranged to apply an electric potential to control the piezoelectric actuator. In some examples, the controller is arranged to control the signal applied by the electrical controller to the piezoelectric actuator.

In some examples, the controller, the electrical controller and the downstream pressure sensor are arranged in a feedback loop. In some examples, the controller is arranged to control the electrical controller in response to the pressure measured by the downstream pressure sensor. In some examples, the feedback loop comprises the upstream pressure sensor. In some examples, the controller is arranged to control the electrical controller in response to the pressure measured by the upstream pressure sensor. In some examples, the controller controls the electrical controller in order to change the pressure downstream of the valve outlet. In some examples, the controller controls the electrical controller in order to maintain a constant pressure downstream of the valve outlet. In some examples, the controller controls the electrical controller in order to achieve the pressure downstream of the valve outlet required at a stage of flight of the aircraft.

In some examples, the controller may be arranged to control the electrical controller to apply pulse width modulation to the piezoelectric actuator. In some examples, the electrical controller applies pulse width modulation to the electric potential applied to the piezoelectric actuator. In some examples, the pulse width modulation frequency is in the range of 1 to 1,000 Hz, for example 100 to 500 Hz, for example 200 to 300 Hz. In some examples, the duty cycle of the pulse width modulation is arranged to control the proportion of a cycle in which the piezoelectric actuator opens or closes the pilot valve member.

In some examples, the pressure measured by the downstream pressure sensor may be used by the controller to control the duty cycle of the pulse width modulation applied by the electrical controller to the piezoelectric actuator. In some examples, the pressure measured by the upstream pressure sensor may be used by the controller to control the duty cycle of the pulse width modulation applied by the electrical controller to the piezoelectric actuator.

In some examples, the electrical controller is arranged to apply pulse width modulation to the electrical potential that is applied to the piezoelectric actuator to maintain the pressure downstream of the valve outlet. In some examples, the electrical controller is arranged to apply pulse width modulation to the electrical potential that is applied to the piezoelectric actuator to reduce variations in pressure downstream of the valve outlet.

In some examples, the pilot valve comprises a biasing member arranged to bias the pilot valve member. In some examples, the biasing member may comprise a spring. In some examples, the biasing member is arranged co-axially with the pilot valve member and piezoelectric actuator.

In some examples, the biasing member may be arranged to bias the pilot valve member closed. In some examples, the pilot valve member may be biased closed to reduce the release of pressure through the release orifice. In some examples, the pilot valve member biased closed may be arranged to increase the pressure in the reference chamber. In some examples, an increase in pressure in the reference chamber is arranged to control the position of the pressure regulation valve member in order to increase (e.g. maximise) the pressure drop from valve inlet to valve outlet. In some examples, the biasing member may be arranged to bias the pilot valve member closed in the event of failure of the pressure regulation valve system.

In some examples, the biasing member is arranged to bias the pilot valve member open. In some examples, the pilot valve member may be biased open to increase the release of pressure through the release orifice. In some examples, the pilot valve member biased open may be arranged to decrease the pressure in the reference chamber. In some examples, an decrease in pressure in the reference chamber is arranged to control the position of the pressure regulation valve member in order to decrease (e.g. minimise) the pressure drop from valve inlet to valve outlet. In some examples, the biasing member may be arranged to bias the pilot valve member open in the event of failure of the pressure regulation valve system.

In some examples, the pressure regulation system is a pressure regulation system of a fluid system of an aircraft. In some examples, the fluid system is a pneumatic fluid system. In some examples the pressure regulation system is in an anti-icing system of an aircraft.

### BRIEF DESCRIPTION OF THE DRAWINGS

One or more non-limiting examples will now be described, by way of example only, and with reference to the accompanying figures in which:
Figure 1 shows a cross sectional side view of a pressure regulation system;
Figure 2 shows a cross sectional side view of a pressure regulation system;
Figure 3 shows a cross sectional side view of a pressure regulation system;
Figure 4 shows a cross sectional side view of a pressure regulation system with a control loop;
Figures 5a to 5h show graphs of the response of the pressure regulation system when pulse width modulation techniques are applied; and
Figure 6 is a flow chart showing a method of operating a pressure regulation valve system.

### DETAILED DESCRIPTION

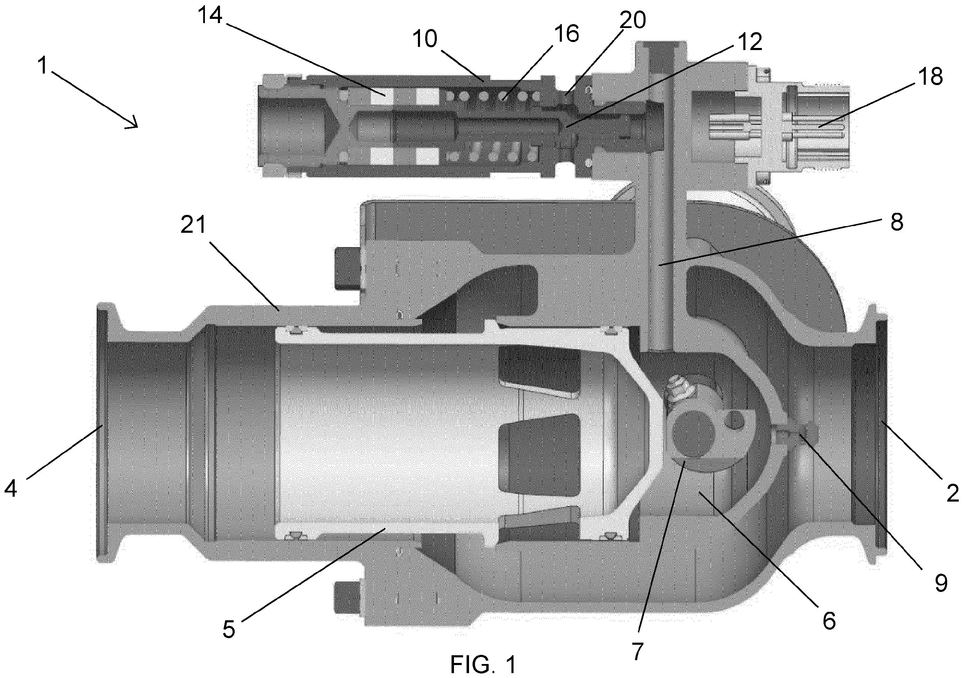

Figure 1 shows a cross sectional side view of an example of a pressure regulation system 1 of a pneumatic fluid system (e.g. an anti-icing system) of an aircraft. The pressure regulation system 1 includes a pressure regulation valve 21 having a valve inlet 2, a valve outlet 4 and a pressure regulation valve member 5. The pressure regulation valve 21 also has a reference chamber 6 that is in fluid communication with a control line 8 and a reference chamber orifice 9.

The reference chamber 6 is pressurised through the reference chamber orifice 9. The pressure in the reference chamber 6 is used to control the position of the pressure regulation valve member 5. The position of the pressure regulation valve member 5 controls the flow of fluid through the pressure regulation valve 21 from the valve inlet 2 to the valve outlet 4. This may be used to control a (e.g. downstream or upstream) pressure in the pressure regulation system 1.

The control line 8 is in fluid communication with a pilot valve 10. The pilot valve 10 has a pilot valve member 12 and a piezoelectric actuator 14 that is arranged to actuate the pilot valve member 12. The pilot valve 10 comprises a release orifice 20, through which fluid from the reference pressure chamber 6 may be vented.

The pilot valve 10 is arranged to regulate the release of pressure through the release orifice 20 to the (e.g. ambient) surroundings, from the reference chamber 6 via the control line 8. By controlling (e.g. varying) the position of the pilot valve member 12 with respect to the release orifice 20, the pressure in the reference chamber 6 may be controlled.

The reference chamber comprises an override cam 7 that is arranged to mechanically control the position of the pressure regulation valve member 5, e.g. to override operation of the pilot valve 10. By controlling the position of the pressure regulation valve member 5 mechanically with the override cam, the (e.g. downstream or upstream) pressure in the pressure regulation system 1 may be controlled.

The pilot valve 10 comprises a biasing member 16 that acts on the pilot valve member 12. The biasing member 16 is arranged to bias the pilot valve member 12 towards a failsafe position. This allows the pilot valve 10 and, as a consequence, the pressure regulation valve member 5, each to be moved to a failsafe position, in the event that electrical power is lost to the system, thus implementing a failsafe condition for the system.

In the pressure regulation system 1 of Figure 1, the pilot valve member 12 is biased towards position in which the path through the release orifice 20 from the control line 8 is open, which causes the pressure in the reference chamber 6 to be reduced. This causes the pressure regulation valve member 5 to move to substantially block the flow of fluid through the pressure regulation valve 21, which increases the pressure drop between the valve inlet 2 and the valve outlet 4.

The pressure regulation system 1 also comprises an electrical controller 18. The electrical controller 18 is arranged to apply an electrical potential to the piezoelectric actuator 4, so to control position of the pilot valve member 2, thus controlling the rate of pressure release through the pilot valve 10.

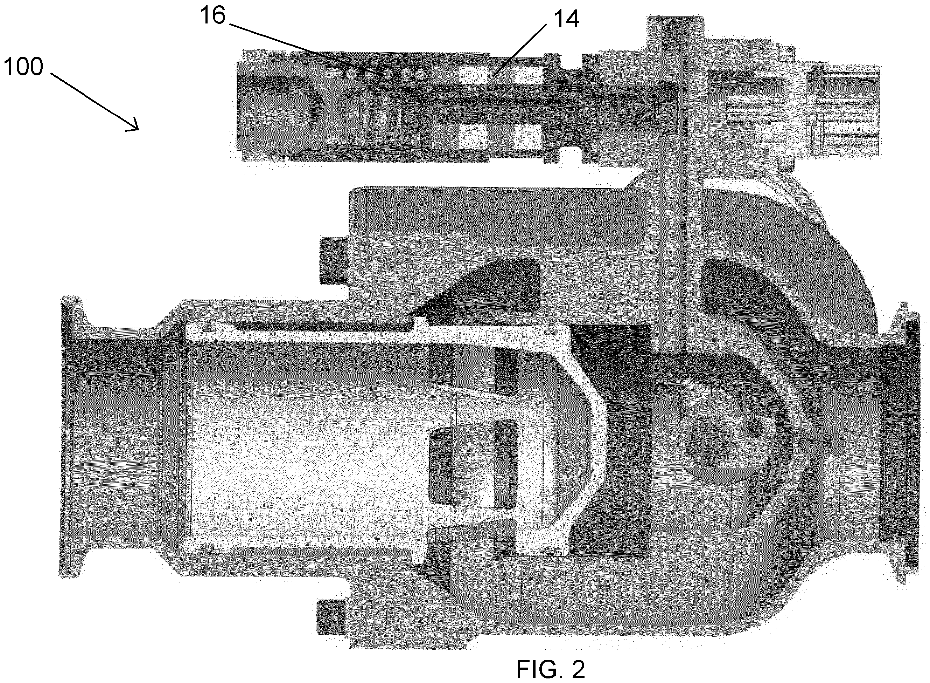

Figure 2 shows a cross sectional side view of an example of a pressure regulation system 100 of a fluid system of an aircraft. The pressure regulation system 100 shown in Figure 2 may comprise any of the features of the pressure regulation system 1, as described above with reference to Figure 1, and discussion of those features will not be repeated here. Like figure reference numerals will be used to denote those features already described with reference to Figure 1.

The pressure regulation system 100 of Figure 2 also includes a pilot valve 10 with a biasing member 16. The biasing member 16 is arranged to bias the pilot valve member 12 towards a failsafe position, allowing the pilot valve 10 and the pressure regulation valve member 5 each to be moved to a failsafe position, in the event that electrical power is lost to the system.

In the pressure regulation system of Figure 2, the pilot valve member 12 is biased towards a closed position, which causes the pressure in the reference chamber 6 to increase. This biases the pressure regulation valve member 5 towards a position in which the flow of fluid is substantially unobstructed from the valve inlet 2 to the valve outlet 4, reducing the pressure drop.

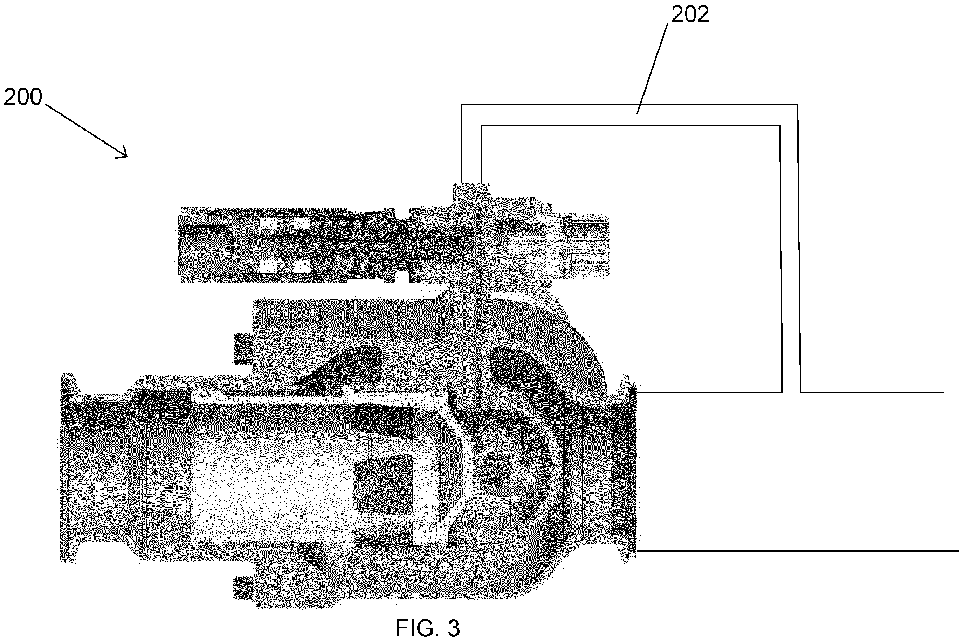

Figure 3 shows a cross sectional side view of an example of a pressure regulation system 200 of a fluid system of an aircraft. The pressure regulation system 200 shown in Figure 3 may comprise any of the features of the pressure regulation system 1, as described above with reference to Figure 1, and discussion of those features will not be repeated here. Like figure reference numerals will be used to denote those features already described with reference to Figure 1.

The reference chamber 6 in the pressure regulation system 200 of Figure 3, is in fluid communication with the control line 202. The control line 202 is in fluid communication with the pneumatic fluid system upstream of valve inlet 2.

The reference chamber 6 is pressurised through the control line 202. The pressure in the reference chamber 6 is used to control the position of the pressure regulation valve member 5, as described above with reference to Figure 1.

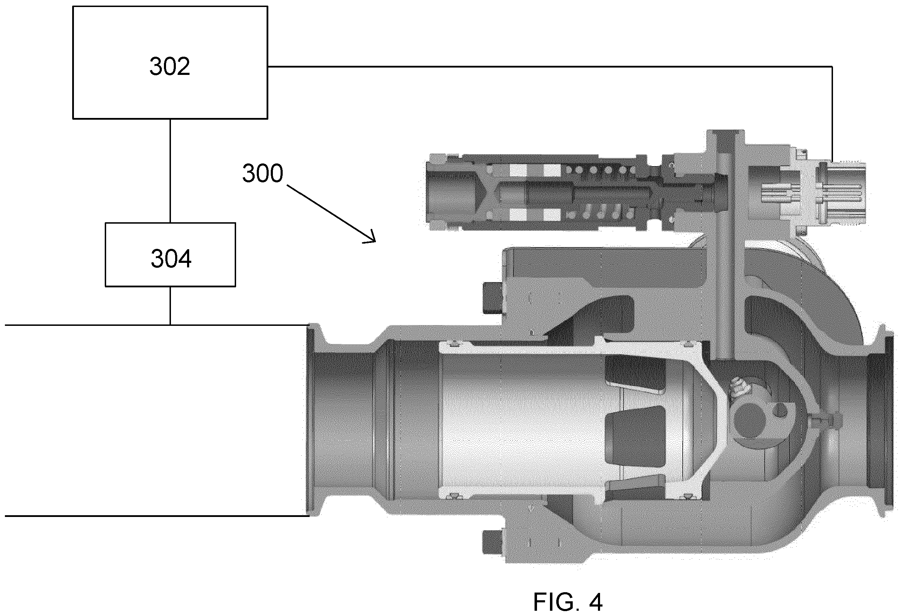

Figure 4 shows a cross sectional side view of an example of a pressure regulation system 300 of a fluid system of an aircraft. The pressure regulation system 300 shown in Figure 4 may comprise any of the features of the pressure regulation system 1, as described above with reference to Figure 1, and discussion of those features will not be repeated here. Like figure references will be used to denote those features already described with reference to Figure 1.

The pressure regulation system 300 of Figure 4 has a controller 302 and a downstream pressure sensor 304. The controller 302 may be a full authority digital engine control (FADEC). The controller 302 is in electrical communication with the electrical controller 18 and the downstream pressure sensor 304. The downstream pressure sensor 304, the controller 302 and the electrical controller 18 form part of a feedback loop for controlling the pressure in the pressure regulation system 300.

The controller 302 receives input from the downstream pressure sensor 304, allowing the controller 302 to communicate with the electric controller 18 to control (e.g. vary) the position of the pilot valve member 12 and the pressure in the reference chamber 6. This controls the downstream pressure at the valve outlet 4 forming a feedback loop. Other pressure sensors, such as an upstream pressure sensor, may be provided in the pressure regulation system 300 to form the part of the feedback loop. The feedback loop may also assist to control the pressure in the reference chamber 6 during operation of the aircraft and at various flight stages.

The pressure in the reference chamber 6 may be controlled using pulse width modulation (PWM) techniques. To do this, the controller 302 is arranged to control the electrical controller 18 to apply a PWM signal to the piezoelectric actuator 14. The PWM signal applied to the piezoelectric actuator 14 is used to control the position of the pilot valve member 12 and in turn the pressure in the reference chamber 6, which is used to control the pressure of the fluid downstream of the valve outlet 4.

The downstream pressure measured by the downstream pressure sensor 304, or any other measured pressure may be used by the controller 302 when implementing the PWM techniques. For example, the controller 302 may use PWM techniques to smooth variations in pressure downstream of the valve outlet 4.

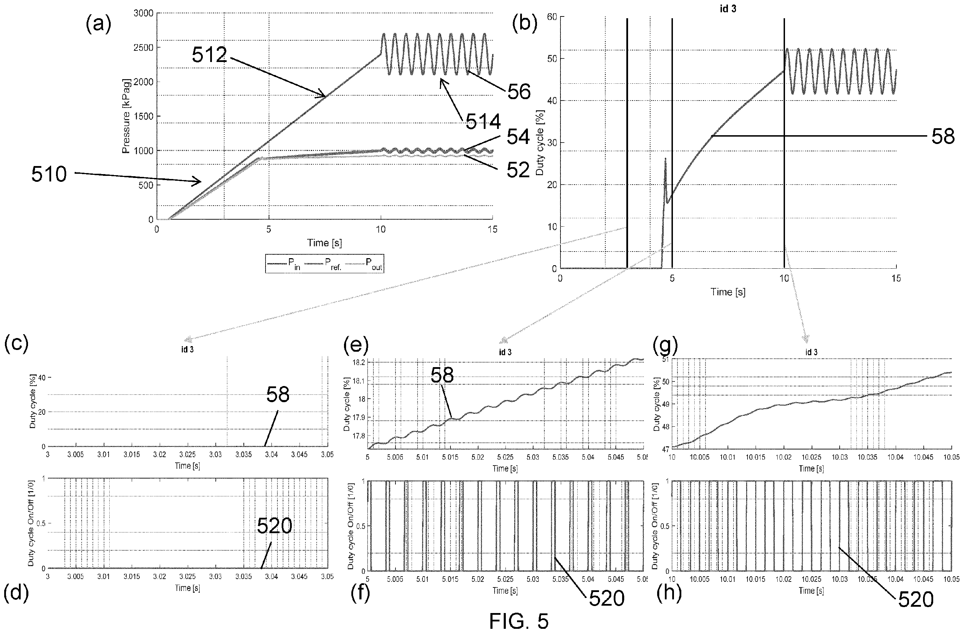

Figures 5a to 5h show plots of the response of the pressure regulation system 300 to varying pressure at the valve inlet 2. Figure 5a shows the valve inlet pressure 56, the valve outlet pressure 52 and the reference chamber pressure 54. Figure 5b shows the duty cycle 58 of the pulse width modulation applied to the piezoelectric actuator 14 by the electrical controller 18. Figures 5c, 5e and 5g each show an enlarged portion of the duty cycle of Figure 5b. Figures 5d, 5f and 5h show the pulse width modulation corresponding to the duty cycles shown in Figures 5c, 5e and 5h respectively.

Figure 5a shows the behaviour of the pressure regulation system 300 in response to controlling (e.g. varying) the pressure at the valve inlet 2. The controller 302 is set to control the pressure regulation system downstream pressure to 900 kPa maximum.

During an initial loading phase 510, the valve inlet pressure 52, the reference chamber pressure 54 and valve outlet pressure 56 each increase in response to the increase in pressure. The duty cycle 58 is at 0% indicating that the pilot valve member is closed, building pressure in the reference chamber. Figure 5c shows the duty cycle between 3 seconds and 3.05 seconds on Figure 5b. Figure 5d shows the pulse width modulation 520 between 3 seconds and 3.05 seconds during the initial loading phase 510 when the duty cycle 58 is 0%.

Upon the valve outlet pressure 52 reaching 900kPa, the controller 302 actuates the pressure regulation system 300, sending a signal to the electrical controller 18. The electrical controller 18 applies PWM to the piezoelectric actuator 14. The duty cycle 58 of the PWM increases, opening the pilot valve member 12, thus controlling the reference chamber pressure 54 and the valve outlet pressure 52.

The reference chamber pressure 54 is therefore regulated by the controller 302 to maintain the valve outlet pressure 52 at 900kPa. The controller 302 is configured, during an excess loading phase 512, to control the electrical controller 18 to apply PWM to the piezoelectric actuator 14 in order to control the reference chamber pressure 54 and maintain the valve outlet pressure 52 at 900kPa. The duty cycle in the excess loading phase of Figure 5 increases as the valve inlet pressure 56 increases. This increases the proportion of each cycle that the pilot valve member 12 is open, thus controlling the reference chamber pressure 54.

Figure 5e shows the duty cycle between 5 seconds and 5.05 seconds on Figure 5b. The duty cycle 58 increases as the valve inlet pressure 56 increases past 900 kPa. Figure 5f shows the pulse width modulation 520 between 5 seconds and 5.05 seconds during the excess loading phase 512. The frequency of the pulse width modulation 520 is approximately 200 Hz. The proportion of each cycle that the pilot valve member 12 is open corresponds with the duty cycle 58 and resulting pulse width modulation 520.

During a variable loading phase 514, the controller 302 uses at least one of the valve inlet pressure 56, or the valve outlet pressure 56 to control the electrical controller 18 to apply the PWM to the piezoelectric actuator 14. The PWM applied to the piezoelectric actuator 14 is used to control the reference chamber pressure 54, which is used to control the valve outlet pressure 52. The duty cycle 58 in the variable loading phase 514 varies in response to the controller 302 receiving at least one of the valve inlet pressure 56 or the valve outlet pressure 52. Controlling the proportion of each cycle that the pilot valve member 12 is open, controls the reference chamber pressure 54 and the valve outlet pressure 52. The use of PWM to control the reference chamber pressure 54 maintains the valve outlet pressure at 900kPa.

Figure 5g shows the duty cycle between 10 seconds and 10.05 seconds on Figure 5b. The duty cycle 58 varies as the valve inlet pressure 56 varies above 900 kPa. Figure 5h shows the pulse width modulation 520 between 10 seconds and 10.05 seconds during the variable loading phase 514. The frequency of the pulse width modulation 520 is approximately 200 Hz. The proportion of each cycle that the pilot valve member 12 is open corresponds with the duty cycle 58 and resulting pulse width modulation 520.

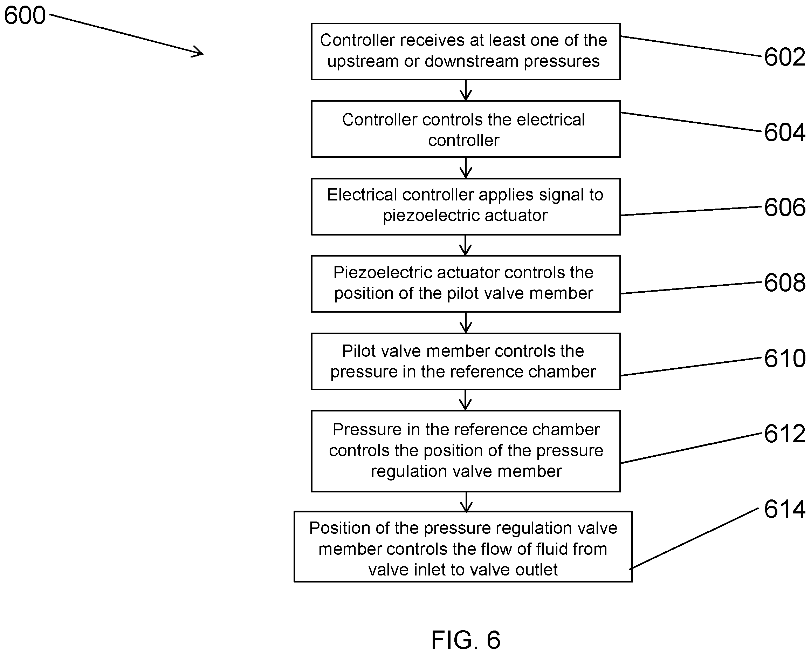

Figure 6 shows a flow chart of a method 600 for operating a pressure regulation valve system 300 of Figures 1-4.

At step 602, the controller 302 receives at least one of the pressure upstream of the valve inlet 2 from the upstream pressure sensor, or the pressure downstream of the valve outlet 4 from the downstream pressure sensor 304.

At step 604, the controller 302 controls the electrical controller 18 in response to the pressure received from at least one of the upstream pressure sensor or downstream pressure sensor 304.

At step 606, the electrical controller 18 applies a signal to the piezoelectric actuator 14 to control the piezoelectric actuator 14. The signal is an electric potential. The signal may be modulated, e.g. using PWM with the upstream or downstream pressure measurement as an input.

At step 608, the piezoelectric actuator 14 is operated to control the position of the pilot valve member 12.

At step 610, the position of the pilot valve member 12 is used to control the pressure in the reference chamber 6,

At step 612, the pressure in the reference chamber 6 is used to control the position of the pressure regulation valve member 5.

At step 614, the position of the pressure regulation valve member 5 is used to control the flow of fluid from valve inlet 2 to valve outlet 4.

In some examples, it will be appreciated that using a piezoelectric actuator to operate a pilot valve of a pressure regulation system of a fluid system of an aircraft may help to improve the fine control of the downstream pressure in fluid systems and offer failsafe arrangements. By improving the accuracy of the pressure regulation, the pressure regulation system may also assist to reduce the mass of the fluid system compared to pneumatically actuated pressure regulation valves or solenoid actuated pressure regulation valves. Further, the pressure regulation system may assist in reducing the mass of fluid bleed from the engine and may increase the efficiency of the aircraft.

Although this disclosure has been described in terms of certain examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A pressure regulation system for a fluid system of an aircraft, the pressure regulation system comprising:
a pressure regulation valve;
wherein the pressure regulation valve comprises:
a valve inlet;
a valve outlet;
a pressure regulation valve member; and
a reference chamber;
wherein the pressure regulation valve member is arranged to control a flow of fluid from the valve inlet to the valve outlet;
wherein a pressure in the reference chamber is arranged to control a position of the pressure regulation valve member;
wherein the pressure regulation system further comprises:
a control line; and
a pilot valve;
wherein the pilot valve comprises:
a pilot valve member; and
a piezoelectric actuator;
wherein the piezoelectric actuator is arranged to control the position of the pilot valve member;
wherein the pilot valve is in fluid communication with the control line and the reference chamber; and
wherein the pilot valve is arranged to control the pressure in the reference chamber.

2. The pressure regulation system as claimed in claim 1, wherein the pressure regulation valve further comprises a reference chamber orifice.

3. The pressure regulation system as claimed in claim 1, wherein the control line is in fluid communication with the fluid system upstream of the valve inlet.

4. The pressure regulation system as claimed in any one of the preceding claims, wherein the piezoelectric actuator is driven by an electric potential.

5. The pressure regulation system as claimed in claim 4, wherein the electric potential is provided by an electrical controller.

6. The pressure regulation system as claimed in any one of the preceding claims, wherein an upstream pressure is measured at the valve inlet or upstream of the valve inlet.

7. The pressure regulation system as claimed in any one of the preceding claims, wherein a downstream pressure is measured at the valve outlet or downstream of the valve outlet.

8. The pressure regulation system as claimed in any one of the preceding claims, wherein the pressure regulation system comprises a controller.

9. The pressure regulation system as claimed in claim 8, wherein the controller is arranged to control the electrical controller to apply pulse width modulation to the piezoelectric actuator.

10. The pressure regulation system as claimed in any one of the preceding claims, wherein the pilot valve comprises a biasing member.

11. The pressure regulation system as claimed in claim 10, wherein the biasing member is arranged to bias the pilot valve member closed.

12. The pressure regulation system as claimed in claim 10, wherein the biasing member is arranged to bias the pilot valve member open.

13. The pressure regulation system as claimed in any one of the preceding claims, wherein the pilot valve comprises a release orifice; and
wherein the pilot valve is arranged to control the release of pressure from the reference chamber through the release orifice.

14. The pressure regulation system as claimed in any one of the preceding claims, wherein the fluid system is a pneumatic fluid system.

15. A method for operating a pressure regulation system of a fluid system of an aircraft, wherein the pressure regulation system comprises:
a pressure regulation valve;
wherein the pressure regulation valve comprises:
a valve inlet;
a valve outlet;
a pressure regulation valve member; and
a reference chamber;
wherein the pressure regulation system further comprises:
a control line; and
a pilot valve;
wherein the pilot valve comprises:
a pilot valve member; and
a piezoelectric actuator;
wherein the pilot valve is in fluid communication with the control line and the reference chamber;
wherein the method comprises:
operating the piezoelectric actuator to control the position of the pilot valve member;
using the position of the pilot valve member to control the pressure in the reference chamber;
using the pressure in the reference chamber to control the position of the pressure regulation valve member; and
using the position of the pressure regulation valve member to control the flow of fluid from valve inlet to valve outlet.
